# EUROPEAN PATENT SPECIFICATION

(11) **EP 3 125 233 B1**
(45) Date of publication and mention of the grant of the patent: **20.10.2021**
(21) Application number: 15768003.4
(22) Date of filing: 18.03.2015
(51) Int. Cl.: G10K 11/162, C08L 23/04, E04B 1/84, G10K 11/16, C08L 9/02, C08L 9/06, C08L 23/16, C08L 23/22

(54) **SOUND INSULATOR**
SCHALLISOLATOR
ISOLANT ACOUSTIQUE

(30) Priority: 27.03.2014 JP 2014066497
(43) Date of publication of application: 01.02.2017
(73) Proprietor: Mitsui Chemicals, Inc., Tokyo 105-7117 (JP)
(72) Inventor: TAKEUCHI, Fumito, Ichihara-shi Chiba 299-0108 (JP); ISHII, Yuji, Ichihara-shi Chiba 299-0108 (JP); ARINO, Mitsunao, Ichihara-shi Chiba 299-0108 (JP); NAKATSUJI, Ryo, Ichihara-shi Chiba 299-0108 (JP); INOMATA, Kiyohide, Ichihara-shi Chiba 299-0108 (JP); SAKAI, Tatsuya, Ichihara-shi Chiba 299-0108 (JP)
(74) Representative: J A Kemp LLP
(86) International application number: PCT/JP2015/058049
(87) International publication number: WO 2015/146743

(56) References cited:
- EP-A1- 1 964 885
- EP-A1- 2 497 789
- WO-A1-2006/131138
- WO-A1-2011/055803
- WO-A1-2013/042657
- JP-A- 2001 142 466
- JP-A- 2012 082 388
- US-A1- 2013 164 495

## Description

### TECHNICAL FIELD

The present invention relates to a sound insulator. More particularly, the present invention relates to a sound insulator having a light weight and excellent sound insulation properties.

### BACKGROUND ART

In the components and housings of building materials, electrical and electronic appliances (e.g., personal computers, office automation equipments, audiovisual equipments and cellular phones), optical instruments, precision instruments, toys, household/office electric appliances and the like, particularly in those parts and molded materials that are utilized in the fields of the transit and transportation industries such as railway vehicles, automobiles, ships and airplanes, vibration damping and sound insulation properties are demanded in addition to general material characteristics such as impact resistance, heat resistance, strength and dimensional stability.

Conventionally, materials with high vibration damping properties have been known; however, these high-vibration-damping materials are not necessarily exhibit excellent sound insulation. For instance, they can block a vibration-transmitting sound represented by a low-frequency range, however, are incapable of effectively blocking the sound in a high-frequency range of 1 to 6 kHz, which is sensitively detected by human ears.

For example, the frequency of wind noise is said to be about 2 to 10 kHz. There is a demand for a technology that can block not only such wind noise but also tire pattern noise and motor-originated noise. Thus, it is necessary to develop a sound insulator that is capable of blocking the sound in a high-frequency range of 1 to 6 kHz, which is sensitively detected by human ears, in a well-balanced manner.

Patent Documents 4 and 5 disclose shock-absorbing materials that are characterized by comprising a combination of two or more polymer materials having different temperature ranges of tan δ determined by dynamic viscoelasticity measurement; however, the sound insulation properties thereof are not sufficiently examined. Patent Document 6 describes a vibration-proof material which is said to be light, excellent in vibration-proof characteristics and excellent in chemical resistance and hydrolysis resistance.

Moreover, in recent years, from the standpoints of reduction in environmental stress and fuel consumption as well as energy saving, weight reduction is strongly demanded for those parts and molded materials that are utilized in the fields of the transit and transportation industries such as railway vehicles, automobiles, ships and airplanes.

As a method of improving the sound insulation properties, Patent Document 1 discloses a technology that improves sound insulation by incorporating an inorganic material such as a high-specific-gravity metal or metal oxide. The sound insulator according to this technology exhibits excellent sound insulation performance; however, since the use of an inorganic material having a specific gravity of 4.0 or higher inevitably makes the sound insulator heavy, the demand for weight reduction is not satisfied. In addition, Patent Documents 2 and 3 also disclose technologies for improving sound insulation by the use of a high-specific-gravity filler.

Furthermore, as a means for improving the sound insulation properties while achieving weight reduction, sound insulators in which a plurality of members are combined or a characteristic feature is imparted to the structure have been examined; however, since these insulators have a complex structure, there is a problem that the productivity is not improved due to a reduction in yield, a reduction in production rate and the like.

That is, it is strongly desired to develop a technology and a material that are capable of achieving both a reduction in weight and an improvement in sound insulation properties without relying on a complex structure.

### PRIOR ART REFERENCES

### PATENT DOCUMENTS

[Patent Document 1] JP-A-S58-90700
[Patent Document 2] JP-A-2001-146534
[Patent Document 3] JP-A-2001-002866
[Patent Document 4] WO 2013/191222
[Patent Document 5] JP-A-2012-162668
[Patent Document 6] JP-A-2012-082388

### SUMMARY OF THE INVENTION

### PROBLEMS TO BE SOLVED BY THE INVENTION

An object of the present invention is to provide a sound insulator which achieves both a reduction in weight and an improvement in sound insulation properties without relying on a complex structure.

### TECHNICAL SOLUTION

The present inventors intensively studied in order to solve the above-described problems and consequently discovered that a light-weight sound insulator having excellent sound insulation properties can be obtained by using a combination of materials each having a peak of loss tangent (tan δ), which is determined by dynamic viscoelasticity measurement, in a specific temperature range. Further, as a result of intensively studying sound insulation, it was discovered that a polymer material having a peak of loss tangent (tan δ), which is determined by dynamic viscoelasticity measurement, in a temperature range of 0°C to 60°C exhibits excellent sound insulation at 1 to 4 kHz and that a polymer material having a peak of loss tangent (tan δ), which is determined by dynamic viscoelasticity measurement, in a temperature range of -60°C to lower than 0°C exhibits excellent sound insulation at 4 to 6 kHz. By blending these polymer materials at an optimum ratio and further cross-linking them depending on the case, a rubber composition and a cross-linked product thereof, which are capable of blocking the sound over a range of 1 to 6 kHz in a well-balanced manner, can be obtained.

That is, the present invention provides a sound insulator which comprises: a flexible material (A) having a peak of loss tangent (tan δ), which is determined by dynamic viscoelasticity measurement, in a temperature range of -60°C to lower than 0°C; and a resin (B) having a peak of loss tangent (tan δ), which is determined by dynamic viscoelasticity measurement, in a temperature range of 0°C to 60°C, the sound insulator comprising the resin (B) at a ratio of 10 to 40 parts by mass with respect to 100 parts by mass of the flexible material (A), and
said resin (B) comprising a 4-methyl-1-pentene·*α*-olefin copolymer (b-1) which contains 61 to 85% by mol of a structural unit (i) derived from 4-methyl-1-pentene, 15 to 39% by mol of a structural unit (ii) derived from at least one *α*-olefin selected from *α*-olefins having 2 to 20 carbon atoms excluding 4-methyl-1-pentene and 0 to 5% by mol of a structural unit (iii) derived from a non-conjugated polyene, with a proviso that the total amount of said structural units (i), (ii) and (iii) is 100% by mol..

In the sound insulator, it is preferred that the flexible material (A) comprise at least one selected from ethylene-based rubbers, natural rubbers and diene-based rubbers.

In the sound insulator, it is preferred that the flexible material (A) comprises an ethylene·*α*-olefin·non-conjugated polyene copolymer (a)

It is preferred that the ethylene·*α*-olefin·non-conjugated polyene copolymer (a) comprises a structural unit derived from ethylene in an amount of 40 to 72% by mass and a structural unit derived from a non-conjugated polyene in an amount of 2 to 15% by mass.

Preferred examples of the sound insulator include sound insulators that are obtained by cross-linking a composition comprising the flexible material (A) and the resin (B) using a vulcanizing agent.

It is preferred that at least a portion of the sound insulator is a foamed article.

Further, the present invention can also provide a sealing material for automobiles, a sealing material for construction a sealing material for railway vehicles, a sealing material for ships, a sealing material for airplanes and the like, all of which comprise the above-described sound insulator.

### ADVANTAGEOUS EFFECTS OF INVENTION

The sound insulator of the present invention is a material which realizes excellent sound insulation properties without relying on a complex shape or an increase in weight.

The sound insulator of the present invention is effective as a component or housing of building materials (e.g., floor linings, walls and ceiling materials), electrical and electronic appliances (e.g., personal computers, office automation equipments, audiovisual equipments and cellular phones), optical instruments, precision instruments, toys, household/office electric appliances and the like, and thus has an extremely high utility value as a component or molded material particularly in the fields of the transit and transportation industries such as railway vehicles, automobiles, ships and airplanes.

### BRIEF DESCRIPTION OF THE DRAWINGS

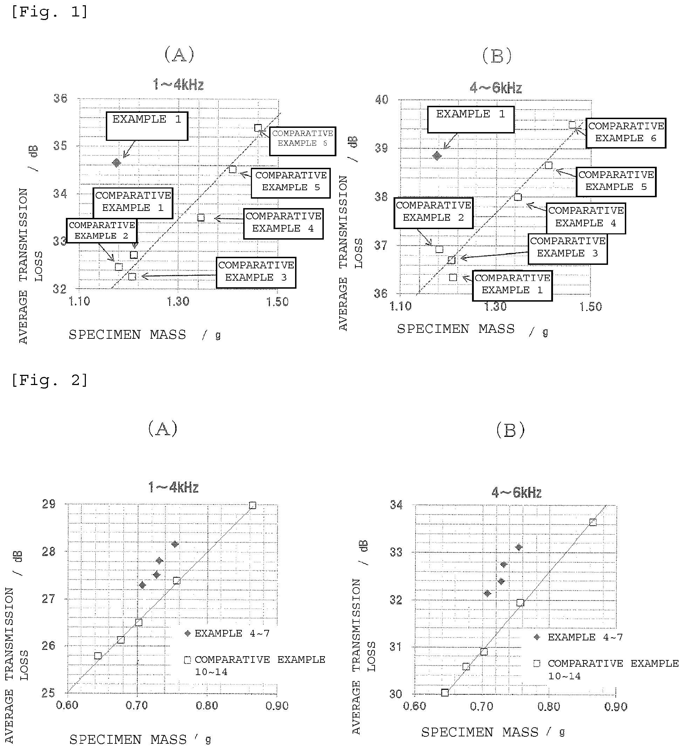

[Fig. 1] Fig. 1(A) is a graph showing the relationship between the specimen weight and the average transmission loss at a frequency of 1 to 4 kHz for the sound insulators of Example 1 and Comparative Examples 1 to 6. Fig. 1(B) is a graph showing the relationship between the specimen weight and the average transmission loss at a frequency of 4 to 6 kHz for the sound insulators of Example 1 and Comparative Examples 1 to 6.
[Fig. 2] Fig. 2(A) is a graph showing the relationship between the specimen weight and the average transmission loss at a frequency of 1 to 4 kHz for the sound insulators of Examples 11 to 16 and Comparative Examples 16 to 20. Fig. 2(B) is a graph showing the relationship between the specimen weight and the average transmission loss in a frequency range of 4 to 6 kHz for the sound insulators of Examples 11 to 16 and Comparative Examples 16 to 20.

### MODE FOR CARRYING OUT THE INVENTION

The present invention is a sound insulator which comprises: a flexible material (A) having a peak of loss tangent (tan δ), which is determined by dynamic viscoelasticity measurement, in a temperature range of -60°C to lower than 0°C; and a resin (B) having a peak of loss tangent (tan δ), which is determined by dynamic viscoelasticity measurement, in a temperature range of 0°C to 60°C, the sound insulator comprising the resin (B) at a ratio of 10 to 40 parts by mass with respect to 100 parts by mass of the flexible material (A).

First, the loss tangent (tan δ) determined by dynamic viscoelasticity measurement will be described. For a subject material, dynamic viscoelasticity measurement is performed while continuously changing the atmospheric temperature, thereby measuring the storage elastic modulus G' (Pa) and the loss elastic modulus G"(Pa) to determine the loss tangent (tan δ), which is represented by G"/G'. According to the relationship between the temperature and the loss tangent (tan δ), the loss tangent (tan δ) generally shows a peak at a specific temperature. The temperature at which the peak appears is generally referred to as "glass transition temperature" (hereinafter, also indicated as "tan δ - Tg". The temperature at which the peak of loss tangent (tan δ) appears can be determined based on the dynamic viscoelasticity measurement described below in Examples.

The flexible material (A) contained in the sound insulator of the present invention has a peak of loss tangent (tan δ) in a temperature range of -60°C to lower than 0°C. The resin (B) contained in the sound insulator of the present invention has a peak of loss tangent (tan δ) in a temperature range of 0°C to 60°C. The sound insulator of the present invention comprises these flexible material (A) and resin (B) at a ratio of 10 to 40 parts by mass of the resin (B) per 100 parts by mass of the flexible material (A). The sound insulator of the present invention that satisfies these conditions has excellent sound insulation properties. The sound insulator of the present invention can realize a reduction in weight because it is not required to contain a filler having a high specific gravity. In addition, the sound insulator of the present invention is not required to be processed into a complex structure because there is no need to use a combination of plural members therein or to impart a characteristic feature to the structure . The reason why the sound insulator of the present invention can realize excellent sound insulation properties by satisfying the above-described conditions is believed to be because the sound insulator is capable of effectively blocking the sound over the entire high-frequency range of 1 to 6 kHz, which is sensitively detected by human ears, by containing a plurality of materials having a peak of loss tangent (tan δ) in different temperature ranges of -60°C to lower than 0°C and 0°C to 60°C at a prescribed ratio.

From the standpoint of improving the sound insulation properties, the flexible material (A) has a peak of loss tangent (tan δ) in a temperature range of preferably -55 to -5°C, more preferably -50 to -10°C, and the resin (B) has a peak of loss tangent (tan δ) in a temperature range of preferably 5 to 55°C, more preferably 10 to 50°C. Further, from the standpoint of improving the sound insulation properties, the sound insulator of the present invention contains the resin (B) at a ratio of 10 to 40 parts by mass, with respect to 100 parts by mass of the flexible material (A).

The type of the flexible material (A) is not particularly restricted because excellent sound insulation properties can be attained as described above as long as the flexible material (A) is a material that has a peak of loss tangent (tan δ) in a temperature range of -60°C to lower than 0°C. Preferably, flexible material (A) comprises an ethylene·*α*-olefin·non-conjugated polyene copolymer (a). The flexible material (A) can comprise a material containing an ethylene-based rubber, a natural rubber, a diene-based rubber and/or the like. The flexible material (A) may also comprise a mixture of these materials.

Examples of the diene-based rubber include isoprene rubber (IR), butadiene rubber (BR), styrene-butadiene rubber (SBR), chloroprene rubber (CR), acrylonitrile-butadiene rubber (NBR) and butyl rubber (IIR).

Examples of the ethylene-based rubber include ethylene·*α*-olefin copolymers (EPM) and ethylene·*α*-olefin·non-conjugated polyene copolymers (EPDM).

Examples of the ethylene·*α*-olefin copolymers include copolymers of ethylene and an *α*-olefin having 3 to 20 carbon atoms. Examples of the *α*-olefin include propylene, butene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, nonadecene-1, eicosene-1, 9-methyl-decene-1, 11-methyl-dodecene-1 and 12-ethyl-tetradecene-1. These *α*-olefins may be used individually, or two or more thereof may be used in combination.

The *α*-olefins in the above-described ethylene·*α*-olefin·non-conjugated polyene copolymers are the same as those in the ethylene·*α*-olefin copolymers.

The non-conjugated polyenes in the ethylene·*α*-olefin·non-conjugated polyene copolymers is, for example, a non-conjugated polyene having 5 to 20 carbon atoms, preferably 5 to 10 carbon atoms, and specific examples thereof include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene, dicyclopentadiene, cyclohexadiene, dicyclooctadiene, methylene norbornene, 5-vinyl norbornene, 5-ethylidene-2-norbornene, 5-methylene-2-norbornene, 5-vinylidene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norobornene, and 2-propenyl-2,2-norbornadiene.

From the standpoints of thermal aging resistance, weather resistance and ozone resistance, it is particularly preferred that the flexible material (A) contain an ethylene·*α*-olefin·non-conjugated polyene copolymer (a). The content of the ethylene·*α*-olefin·non-conjugated polyene copolymer (a) in the flexible material (A) is preferably 50 to 100% by mass, more preferably 70 to 100% by mass.

In the ethylene·*α*-olefin·non-conjugated polyene copolymer (a), from the standpoint of flexibility, the content of a structural unit derived from ethylene is preferably 40 to 72% by mass, more preferably 42 to 66% by mass, still more preferably 44 to 62% by mass, and the content of a structural unit derived from a non-conjugated polyene is preferably 2 to 15% by mass, more preferably 5 to 14% by mass, still more preferably 7 to 12% by mass.

In the ethylene·*α*-olefin·non-conjugated polyene copolymer (a), among the above-described *α*-olefins, those having 3 to 10 carbon atoms are preferred and, for example, propylene, 1-butene, 1-hexene and 1-octene are particularly preferred.

In the ethylene·*α*-olefin·non-conjugated polyene copolymer (a), among the above-described non-conjugated polyenes, for example, dicyclopentadiene, 5-vinylidene-2-norbornene and 5-ethylidene-2-norbornene are preferred.

Further, it is preferred that the content of a crystallized polyolefin in the flexible material (A) be less than 10% by mass.

The type of the resin (B) is not particularly restricted because excellent sound insulation properties can be attained as described above as long as the resin (B) is a material that has a peak of loss tangent (tan δ) in a temperature range of 0°C to 60°C and comprises a 4-methyl-1-pentene·*α*-olefin copolymer (b-1). The resin (B) can comprise aromatic polymers, polyvinyl acetates, polyesters, polyurethanes, poly(meth)acrylates, epoxy resins and polyamides. The resin (B) may also be a mixture of these materials. From the standpoints of weather resistance and ozone resistance, the resin (B) contains a 4-methyl-1-pentene·*α*-olefin copolymer (b-1) .

Examples of the aromatic polymers include polymers of an aromatic vinyl monomer (s), such as styrene and alkylstyrenes; and copolymers of an aromatic vinyl monomer and an olefin monomer.

The *α*-olefin in the 4-methyl-1-pentene·*α*-olefin copolymer (b) is, for example, an *α*-olefin having 2 to 20 carbon atoms and, excluding 4-methyl-1-pentene, examples thereof include linear or branched *α*-olefins, cyclic olefins, aromatic vinyl compounds, conjugated dienes, and functionalized vinyl compounds. It is defined here that non-conjugated polyenes are not included in the *α*-olefin of the 4-methyl-1-pentene·*α*-olefin copolymer.

The linear *α*-olefins are, for example, those having 2 to 20 carbon atoms, preferably 2 to 15 carbon atoms, more preferably 2 to 10 carbon atoms, and specific examples thereof include ethylene, propylene, 1-butene, 1-pentene, 1-hexene, 1-octene, 1-decene, 1-undecene, 1-dodecene, 1-tetradecene, 1-hexadecene, 1-octadecene, and 1-eicosene. Thereamong, ethylene, propylene, 1-butene, 1-pentene, 1-hexene and 1-octene are preferred.

The branched *α*-olefins are, for example, those having preferably 5 to 20 carbon atoms, more preferably 5 to 15 carbon atoms, and specific examples thereof include 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene.

The cyclic olefins are, for example, those having 3 to 20 carbon atoms, more preferably 5 to 15 carbon atoms, and specific examples thereof include cyclopentene, cyclohexene, cycloheptene, norbornene, 5-methyl-2-norbornene, tetracyclododecene, and vinylcyclohexene.

Examples of the aromatic vinyl compounds include styrene and mono- or a poly-alkylstyrenes, such as *α*-methylstyrene, *o*-methylstyrene, *m*-methylstyrene, *p*-methylstyrene, *o*,p-dimethylstyrene, *o*-ethylstyrene, *m*-ethylstyrene and *p*-ethylstyrene.

The conjugated dienes are, for example, those having 4 to 20 carbon atoms, preferably 4 to 10 carbon atoms, and specific examples thereof include 1,3-butadiene, isoprene, chloroprene, 1,3-pentadiene, 2,3-dimethyl butadiene, 4-methyl-1,3-pentadiene, 1,3-hexadiene, and 1,3-octadiene.

Examples of the functionalized vinyl compounds include hydroxyl group-containing olefins; halogenated olefins; unsaturated carboxylic acids, such as (meth)acrylic acid, propionic acid, 3-butenoic acid, 4-pentenoic acid, 5-hexenoic acid, 6-heptenoic acid, 7-octenoic acid, 8-nonenoic acid, 9-decenoic acid and 10-undecenoic acid; unsaturated amines, such as allylamine, 5-hexeneamine and 6-hepteneamine; (2,7-octadienyl) succinic anhydride, pentapropenyl succinic anhydride, unsaturated carboxylic acid anhydrides such as those obtained from the above-described unsaturated carboxylic acids; unsaturated carboxylic halides, such as halides obtained from the above-described unsaturated carboxylic acids; unsaturated epoxy compounds, such as 4-epoxy-1-butene, 5-epoxy-1-pentene, 6-epoxy-1-hexene, 7-epoxy-1-heptene, 8-epoxy-1-octene, 9-epoxy-1-nonene, 10-epoxy-1-decene and 11-epoxy-1-undecene; and ethylenically unsaturated silane compounds, such as vinyltriethoxysilane, vinyltrimethoxysilane, 3-acryloxypropyl trimethoxysilane, *γ*-glycidoxypropyl trimethoxysilane, *γ*-aminopropyl triethoxysilane and *γ*-methacryloxypropyl trimethoxysilane.

The hydroxyl group-containing olefins are not particularly restricted as long as they are hydroxyl group-containing olefin compounds, and examples thereof include hydroxyl group-terminated olefin compounds. Examples of the hydroxyl group-terminated olefin compounds include linear hydroxylated *α*-olefins having 2 to 20, preferably 2 to 15 carbon atoms, such as vinyl alcohols, allyl alcohols, hydroxylated 1-butene, hydroxylated-1-pentene, hydroxylated 1-hexene, hydroxylated 1-octene, hydroxylated 1-decene, hydroxylated 1-undecene, hydroxylated 1-dodecene, hydroxylated 1-tetradecene, hydroxylated 1-hexadecene, hydroxylated 1-octadecene and hydroxylated 1-eicosene; and branched hydroxylated *α*-olefins having preferably 5 to 20 carbon atoms, more preferably 5 to 15 carbon atoms, such as hydroxylated 3-methyl-1-butene, hydroxylated 3-methyl-1-pentene, hydroxylated 4-methyl-1-pentene, hydroxylated 3-ethyl-1-pentene, hydroxylated 4,4-dimethyl-1-pentene, hydroxylated 4-methyl-1-hexene, hydroxylated 4,4-dimethyl-1-hexene, hydroxylated 4-ethyl-1-hexene and hydroxylated 3-ethyl-1-hexene.

The halogenated olefins are, for example, halogenated *α*-olefins having an atom belonging to Group 17 of the periodic table such as chlorine, bromine or iodine, and specific examples thereof include linear halogenated *α*-olefins having 2 to 20 carbon atoms, preferably 2 to 15 carbon atoms, such as halogenated vinyl, halogenated 1-butene, halogenated 1-pentene, halogenated 1-hexene, halogenated 1-octene, halogenated 1-decene, halogenated 1-dodecene, halogenated 1-undecene, halogenated 1-tetradecene, halogenated 1-hexadecene, halogenated 1-octadecene and halogenated 1-eicosene; and branched halogenated *α*-olefins having preferably 5 to 20 carbon atoms, more preferably 5 to 15 carbon atoms, such as halogenated 3-methyl-1-butene, halogenated 4-methyl-1-pentene, halogenated 3-methyl-1-pentene, halogenated 3-ethyl-1-pentene, halogenated 4,4-dimethyl-1-pentene, halogenated 4-methyl-1-hexene, halogenated 4,4-dimethyl-1-hexene, halogenated 4-ethyl-1-hexene and halogenated 3-ethyl-1-hexene.

In the 4-methyl-1-pentene·*α*-olefin copolymer (b), the above-described *α*-olefins may be used individually, or two or more thereof may be used in combination.

As the *α*-olefin in the 4-methyl-1-pentene·*α*-olefin copolymer (b), ethylene, propylene, 1-butene, 1-pentene, 1-hexene, 3-methyl-1-butene, 3-methyl-1-pentene, 1-octene, 1-decene, 1-undecene, 1-dodecene, 1-tetradecene, 1-hexadecene, 1-octadecene, 1-eicosene, norbornene, 5-methyl-2-norbornene, tetracyclododecene and hydroxylated-1-undecene are particularly suitable. Further, from the standpoints of flexibility, stress absorption, stress relaxation and the like, linear *α*-olefins having 2 to 10 carbon atoms are preferred, and ethylene, propylene, 1-butene, 1-pentene, 1-hexene and 1-octene are more preferred. Thereamong, from the standpoint of attaining high stress absorption and polyolefin-modifying property, ethylene and propylene are preferred, and propylene is particularly preferred.

As required, the 4-methyl-1-pentene·*α*-olefin copolymer (b) may also contain a structural unit derived from a non-conjugated polyene. The non-conjugated polyene is the same as the one in the above-described ethylene·*α*-olefin·non-conjugated polyene copolymer (a).

The 4-methyl-1-pentene·*α*-olefin copolymer (b) may also contain other copolymerizable component within a range that does not adversely affect the object of the present invention.

The 4-methyl-1-pentene·*α*-olefin copolymer (b-1) contains a structural unit (i) derived from 4-methyl-1-pentene, a structural unit (ii) derived from at least one *α*-olefin selected from *α*-olefins having 2 to 20 carbon atoms excluding 4-methyl-1-pentene and, optionally, a structural unit (iii) derived from a non-conjugated polyene at the following ratios is preferred. That is, in the 4-methyl-1-pentene·*α*-olefin copolymer (b-1), taking the total amount of the structural units (i), (ii) and (iii) as 100% by mol, the structural units (i), (ii) and (iii) are contained at ratios of 61 to 85% by mol, 15 to 39% by mol and 0 to 5% by mol, respectively.

In addition to the above-described flexible material (A) and resin (B), the sound insulator of the present invention may also contain a softener, a reinforcing agent, a filler, a processing aid, an activator, a moisture absorbent and the like within a range that does not adversely affect the object of the present invention.

The softener can be selected as appropriate in accordance with the use thereof, and a softener may be used individually, or two or more thereof may be used in combination. Specific examples of the softener include petroleum-based softeners, for example, process oils such as paraffin oils (e.g., "DIANA PROCESS OIL PS-430" (trade name, manufactured by Idemitsu Kosan Co., Ltd.)), lubricating oils, liquid paraffin, petroleum asphalt and vaseline; coal tar-based softeners such as coal tar and coal tar pitch; fatty oil-based softeners such as castor oil, linseed oil, rapeseed oil, soybean oil and coconut oil; waxes such as beeswax, carnauba wax and lanolin; fatty acids and salts thereof, such as ricinoleic acid, palmitic acid, stearic acid, barium stearate, calcium stearate and zinc laurate; naphthenic acid, pine oil, rosin, and derivatives thereof; synthetic polymer materials such as terpene resins, petroleum resins, atactic polypropylenes and coumarone-indene resins; ester-based softeners such as dioctyl phthalate, dioctyl adipate and dioctyl sebacate; and other softeners such as microcrystalline waxes, liquid polybutadienes, modified liquid polybutadienes, liquid thiokols, hydrocarbon-based synthetic lubricating oils, tall oil and rubber substitutes (factice). Thereamong, petroleum-based softeners are preferred, and process oils, especially paraffin oils, are particularly preferred.

The softener is incorporated in an amount of usually 5 to 150 parts by mass, preferably 10 to 120 parts by mass, more preferably 20 to 100 parts by mass, with respect to 100 parts by mass of the flexible material (A).

Specific examples of a reinforcing agent that can be used include commercially available carbon blacks such as "Asahi #55G" and "Asahi #50HG" (trade name: manufactured by Asahi Carbon Co., Ltd.), and "SEAST (trade name)" Series: SRF, GPF, FEF, MAF, HAF, ISAF, SAF, FT and MT (manufactured by Tokai Carbon Co., Ltd.); these carbon blacks that are surface-treated with a silane-coupling agent or the like; silica; activated calcium carbonate; finely powdered talc; and finely powdered silicic acid. Thereamong, carbon blacks "Asahi #55G", "Asahi #50HG" and "SEAST HAF" are preferred.

As the filler, light calcium carbonates, heavy calcium carbonates, talc, clays and the like can be used. Thereamong, heavy calcium carbonates are preferred. As a heavy calcium carbonate, for example, commercially available "WHITON SB" (trade name: manufactured by Shiraishi Calcium Kaisha, Ltd.) can be used.

The reinforcing agent and the filler are each incorporated in an amount of usually 30 to 300 parts by mass, preferably 50 to 250 parts by mass, still more preferably 70 to 230 parts by mass, with respect to 100 parts by mass of the flexible material (A) .

As the processing aid, substances that are generally incorporated as a processing aid into rubbers can be widely used. Specific examples thereof include ricinoleic acid, stearic acid, palmitic acid, lauric acid, barium stearate, zinc stearate, calcium stearate and esters. Thereamong, stearic acid is preferred. The processing aid is incorporated as appropriate in an amount of usually 10 parts by mass or less, preferably 8.0 parts by mass or less, still more preferably 5.0 parts by mass or less, with respect to 100 parts by mass of the flexible material (A) .

The activator can be selected as appropriate in accordance with the use thereof, and an activator may be used individually, or two or more thereof may be used in combination. Specific examples of the activator include amines such as di-n-butylamine, dicyclohexylamine, monoethanolamine, "ACTING B" (trade name: manufactured by Yoshitomi Pharmaceutical Industries, Ltd.) and "ACTING SL" (trade name: manufactured by Yoshitomi Pharmaceutical Industries, Ltd.); activators such as diethylene glycol, polyethylene glycols (e.g., "PEG#4000" (manufactured by Lion Corporation)), lecithin, triallyl trimellitate, and zinc compounds of aliphatic and aromatic carboxylic acids (e.g., "STRUKTOL ACTIVATOR 73", "STRUKTOL IB531" and "STRUKTOL FA541" (trade names: manufactured by Schill & Seilacher GmbH)); zinc peroxide-modified activators such as "ZEONET ZP" (trade name: manufactured by ZEON Corporation); octadecyltrimethylammonium bromide; synthetic hydrotalcites; and special quaternary ammonium compounds (e.g., "ARQUAD 2HF" (trade name: manufactured by LION AKZO Co., Ltd.)). Thereamong, polyethylene glycols (e.g., "PEG#4000" (manufactured by Lion Corporation)) and "ARQUAD 2HF" are preferred. The activator is incorporated in an amount of usually 0.2 to 10 parts by mass, preferably 0.3 to 5 parts by mass, still more preferably 0.5 to 4 parts by mass, with respect to 100 parts by mass of the flexible material (A).

The moisture absorbent can be selected as appropriate in accordance with the use thereof, and a moisture absorbent may be used individually, or two or more thereof may be used in combination. Specific examples of the moisture absorbent include calcium oxide, silica gel, sodium sulfate, molecular sieve, zeolite and white carbon. Thereamong, calcium oxide is preferred. The moisture absorbent is incorporated in an amount of usually 0.5 to 15 parts by mass, preferably 1.0 to 12 parts by mass, still more preferably 1.0 to 10 parts by mass, with respect to 100 parts by mass of the flexible material (A).

The sound insulator of the present invention can be obtained by kneading the above-described components. The shape of the sound insulator of the present invention is not particularly restricted. For example, the sound insulator of the present invention is molded into a sheet form by a sheet molding method such as calender rolling or T-die extrusion. By molding the sound insulator of the present invention into a sheet form, the sound insulator of the present invention can be used as a sound insulation sheet. Further, by compression-molding the resulting sheet using a die that yields a molded article of a prescribed shape, a sound insulator of a desired shape can be obtained.

In cases where the sound insulator of the present invention contains cross-linkable components such as an ethylene·*α*-olefin·non-conjugated polyene copolymer, these components may be cross-linked as well. For the cross-linking, a vulcanizing agent is added to the cross-linkable components and the resultant is kneaded. That is, the sound insulator of the present invention can also be obtained by cross-linking a composition that comprises the flexible material (A) and the resin (B) using a vulcanizing agent.

As the vulcanizing agent (cross-linking agent), for example, sulfur compounds, organic peroxides, phenol resins and oxime compounds can be used.

Examples of the sulfur compounds include sulfur, sulfur chloride, sulfur dichloride, morpholine disulfide, alkylphenol disulfide, tetramethylthiuram disulfide and selenium dithiocarbamate. Thereamong, sulfur and tetramethylthiuram disulfide are preferred. Such sulfur compound is incorporated in an amount of usually 0.3 to 10 parts by mass, preferably 0.5 to 5.0 parts by mass, still more preferably 0.7 to 4.0 parts by mass, with respect to 100 parts by mass of the flexible material (A) .

Examples of the organic peroxides include dicumyl peroxide, 2,5-dimethyl-2,5-di(*t*-butylperoxy)hexane, 2,5-dimethyl-2,5-di(benzoylperoxy)hexane, 2,5-diethyl-2,5-di(*t*-butylperoxy)hexyne-3, di-*t*-butylperoxide, di-*t*-butylperoxy-3,3,5-trimethylcyclohexane, and *t*-butylhydroperoxide. Thereamong, dicumyl peroxide, di-*t*-butyl peroxide and di-*t*-butylperoxy-3,3,5-trimethylcyclohexane are preferred. Such organic peroxide is incorporated in an amount of usually 0.001 to 0.05 mol, preferably 0.002 to 0.02 mol, still more preferably 0.005 to 0.015 mol, with respect to 100 g of the flexible material (A).

In cases where a sulfur compound is used as the vulcanizing agent, it is preferred that a vulcanization accelerator be used in combination. Examples of the vulcanization accelerator include thiazole-based vulcanization accelerators, such as *N*-cyclohexyl-2-benzothiazole sulfenamide, *N*-oxydiethylene-2-benzothiazole sulfenamide, *N*-oxydiethylene-2-benzothiazole sulfenamide, *N*,*N*'-diisopropyl-2-benzothiazole sulfenamide, 2-mercaptobenzothiazole (e.g., "SANCELER M" (trade name: manufactured by Sanshin Chemical Industry Co., Ltd.)), 2-(4-morpholinodithio)benzothiazole (e.g., "NOCCELER MDB-P" (trade name: manufactured by Sanshin Chemical Industry Co., Ltd.)), 2-(2,4-dinitrophenyl)mercaptobenzothiazole, 2-(2,6-diethyl-4-morpholinothio)benzothiazole and dibenzothiazyl disulfide; guanidine-based vulcanization accelerators, such as diphenylguanidine, triphenylguanidine and di-ortho-tolylguanidine; aldehyde amine-based vulcanization accelerators, such as acetaldehyde-aniline condensate and butylaldehyde-aniline condensate; imidazoline-based vulcanization accelerators, such as 2-mercaptoimidazoline; thiourea-based vulcanization accelerators, such as diethylthiourea and dibutylthiourea; thiuram-based vulcanization accelerators, such as tetramethylthiuram monosulfide and tetramethylthiuram disulfide; dithioate-based vulcanization accelerators, such as zinc dimethyldithiocarbamate, zinc diethyldithiocarbamate, zinc dibutyldithiocarbamate (e.g., "SANCELER PZ" (trade name: manufactured by Sanshin Chemical Industry Co., Ltd.) and "SANCELER BZ" (trade name: manufactured by Sanshin Chemical Industry Co., Ltd.)), and tellurium diethyldithiocarbamate; thiourea-based vulcanization accelerators, such as ethylene thiourea (e.g.,"SANCELER BUR" (trade name: manufactured by Sanshin Chemical Industry Co., Ltd.) and "SANCELER 22-C" (trade name: manufactured by Sanshin Chemical Industry Co., Ltd.)), and *N*,*N*'-diethylthiourea; xanthate-based vulcanization accelerators, such as zinc dibutylxanthate; and zinc white (e.g., zinc oxide such as "META-Z102" (trade name: manufactured by Inoue Calcium Corporation)).

These vulcanization accelerators are incorporated in an amount of usually 0.1 to 20 parts by mass, preferably 0.2 to 15 parts by mass, still more preferably 0.5 to 10 parts by mass, with respect to 100 parts by mass of the flexible material (A).

In cases where vulcanization is performed, a vulcanization aid may also be used. The vulcanization aid can be selected as appropriate in accordance with the use thereof, and a vulcanization aid may be used individually, or two or more thereof may be used in combination. Specific examples of the vulcanization aid include magnesium oxide and zinc white (e.g., zinc oxide such as "META-Z102" (trade name: manufactured by Inoue Calcium Corporation). The vulcanization aid is usually incorporated in an amount of 1 to 20 parts by mass with respect to 100 parts by mass of the flexible material (A). Other examples of the vulcanization aid include quinone dioxime-based vulcanization aids such as p-quinone dioxime; acrylic vulcanization aids, such as ethylene glycol dimethacrylate and trimethylolpropane trimethacrylate; allyl vulcanization aids, such as diallyl phthalate and triallyl isocyanurate; maleimide-based vulcanization aids; and divinylbenzene.

The sound insulator of the present invention may be entirely or partially a foamed article. The foamed article may be a vulcanized foamed article. By constituting at least a portion of the sound insulator of the present invention with a foamed article, for example, the sound insulator can be effectively used as a sponge-form seal product for automobiles, particularly as a weather strip.

In cases where the sound insulator of the present invention is made into a foamed article, the above-described components are foamed with an addition of a foaming agent thereto. Examples of the foaming agent include inorganic foaming agents, such as sodium bicarbonate and sodium carbonate; and organic foaming agents, such as nitroso compounds (e.g., *N*,*N*'-dinitrosopentamethylene tetramine and *N*,*N*'-dinitrosoterephthalamide), azo compounds (e.g., azodicarbonamide and azobis-isobutyronitrile), hydrazide compounds (e.g., benzenesulfonylhydrazide and 4,4'-oxybis(benzenesulfonylhydrazide)) and azide compounds (e.g., calcium azide and 4,4'-diphenyldisulfonyl azide).

The foaming agent is incorporated in an amount of usually 3 to 30 parts by mass, preferably 4 to 20 parts by mass, with respect to 100 parts by mass of the flexible material (A). As the foaming agent, for example, VINYFOR AC#3M (trade name: azodicarbonamide manufactured by Eiwa Chemical Ind. Co., Ltd. (abbreviation: ADCA)), VINYFOR AC#3C-K2 azodicarbonamide (trade name: azodicarbonamide manufactured by Eiwa Chemical Ind. Co., Ltd. (abbreviation: ADCA)), CELLMIC C-2 (trade name: azodicarbonamide manufactured by Sankyo Kasei Co., Ltd. (abbreviation: ADCA)) and NEOCELLBORN N#1000M (trade name: 4,4'-oxybis(benzenesulfonylhydrazide) manufactured by Eiwa Chemical Ind. Co., Ltd. (abbreviation: OBSH)), all of which are commercially available, can be used.

Further, a foaming aid may also be used along with the foaming agent. Examples of the foaming aid include organic acids, such as salicylic acid, phthalic acid, stearic acid, oxalic acid and citric acid, and salts thereof; and urea and derivatives thereof. The foaming aid is incorporated in an amount of usually 0.1 to 5 parts by mass, preferably 0.3 to 4 parts by mass, with respect to 100 parts by mass of the flexible material (A). As the foaming aid, for example, CELLPASTE K5 (trade name: urea manufactured by Eiwa Chemical Ind. Co., Ltd.) and FE-507 (trade name: sodium bicarbonate manufactured by Eiwa Chemical Ind. Co. , Ltd.), which are commercially available, can be used.

In cases where the sound insulator of the present invention is a vulcanized foamed article, a composition containing the above-described components, vulcanizing agent, foaming agent and the like are vulcanized and foamed. Examples of a method for the vulcanization and foaming include a method in which the composition is extruded and molded into a tube form using an extruder fitted to a tube-shaped die. Simultaneously with the molding, the resulting molded article can be introduced to a vulcanization chamber and heated at, for example, 230°C for 5 minutes to perform cross-linking and foaming, thereby a tube-shaped foamed article (sponge) can be obtained.

As described above, the sound insulator of the present invention is a material which realizes excellent sound insulation properties while having a light weight, without relying on a complex shape; therefore, the sound insulator of the present invention can be used in a variety of applications. For example, a sealing material for automobiles, a sealing material for construction, a sealing material for railway vehicles, a sealing material for ships, a sealing material for airplanes and the like, which comprise the sound insulator of the present invention, are all excellent sound insulation products.

### EXAMPLES

The present invention will now be described more concretely by way of examples thereof; however, the present invention is not restricted thereto by any means. In the tables below, the numerical values of the respective components represent values based on parts by mass.

### (Composition Materials)

The composition materials used in Examples and Comparative Examples are as follows.

### A) Flexible Material

A-1) EPDM (trade name: Mitsui EPT 1045 (manufactured by Mitsui Chemicals, Inc.); ethylene content: 58 wt%, dicyclopentadiene content: 5.0 wt%, Mooney viscosity [ML₁₊₄ (100°C)]: 38)
A-2) EPDM (trade name: Mitsui EPT 8030M (manufactured by Mitsui Chemicals, Inc.); EPDM, content of a structural unit derived from ethylene: 47% by mass, content of a structural unit derived from 5-ethylidene-2-norbornene (ENB): 9.5% by mass, Mooney viscosity [ML₁₊₄ (100°C)]: 32)
A-3) EPDM obtained in accordance with the following Polymerization Example 1

### [Polymerization Example 1]

Using a 300-L polymerizer equipped with a stirring blade, a quaternary copolymerization reaction was continuously performed at 80°C using ethylene, propylene, 5-ethylidene-2-norbornene (ENB) and 5-vinyl-2-norbornene (VNB) . Using hexane (final concentration: 90.8% by weight) as a polymerization solvent, ethylene, propylene, ENB and VNB were continuously fed at concentrations of 3.1% by weight, 4.6% by weight, 1.4% by weight and 0.11% by weight, respectively. While maintaining the polymerization pressure at 0.8 MPa, a metallocene catalyst, [*N*-(1,1-dimethylethyl)-1,1-dimethyl-1-[(1,2,3,3A,8A-η)-1,5,6, 7-tetrahydro-2-methyl-s-indacen-1-yl]silanaminato(2-)-κN] [(1, 2,3,4-η)-1,3-pentadiene]-titanium, was continuously fed as a main catalyst to a concentration of 0.0013 mmol/L. In addition, as a co-catalyst and an organoaluminum compound, (C₆H₅)₃CB(C₆F₅)₄ and triisobutylaluminum (TIBA) were continuously fed to concentrations of 0.0066 mmol/L and 0.0154 mmol/L, respectively. It is noted here that the metallocene catalyst was synthesized in accordance with the method described in WO 98/49212.

In this manner, a polymerization reaction solution containing 10.8% by weight of a copolymer rubber synthesized from ethylene, propylene, ENB and VNB was obtained. The polymerization reaction was terminated by adding a small amount of methanol to the polymerization reaction solution withdrawn from the bottom of the polymerizer. Then, after separating the copolymer rubber from the solvent by a steam stripping treatment, the copolymer rubber was dried at 80°C under reduced pressure over a whole day and night to obtain an ethylene·propylene·non-conjugated diene random copolymer. In this copolymer, the content of a structural unit derived from ethylene was 46% by mass and the total content of structural units derived from 5-ethylidene-2-norbornene (ENB) and 5-vinyl-2-norbornene (VNB) was 11.6% by mass, and the copolymer had a Mooney viscosity [ML₁₊₄ (160°C)] of 74.

### B) Resin

### B-1) a polymer obtained in accordance with the following

### Polymerization Example 2

### [Polymerization Example 2]

To a stirring blade-equipped 1.5-L SUS autoclave which had been sufficiently purged with nitrogen, 300 ml of n-hexane (dried over activated alumina in a dry nitrogen atmosphere) and 450 ml of 4-methyl-1-pentene were introduced at 23°C. To this autoclave, 0.75 ml of a 1.0-mmol/ml toluene solution of triisobutylaluminum (TIBAL) was added, and the stirrer was operated.

Next, the autoclave was heated to an inner temperature of 60°C and pressurized with propylene to a total pressure of 0.40 MPa (gauge pressure). Then, 0.34 ml of a toluene solution prepared in advance, which contained 1 mmol of methylaluminoxane in terms of Al and 0.01 mmol of diphenylmethylene(1-ethyl-3-t-butyl-cyclopentadienyl) (2,7-dit-butyl-fluorenyl)zirconium dichloride, was injected with nitrogen into the autoclave, thereby initiating polymerization. During the polymerization, the inner temperature of the autoclave was controlled at 60°C. After 60 minutes from the initiation of the polymerization, 5 ml of methanol was injected with nitrogen into the autoclave to terminate the polymerization, and the autoclave was depressurized to the atmospheric pressure. While stirring the reaction solution, acetone was pour thereinto to allow a polymer to precipitate.

A solvent-containing polymer aggregate obtained by filtering the reaction solution was dried at 100°C under reduced pressure for 12 hours. The thus obtained polymer weighed 36.9 g and contained 72 mol% of a structural unit derived from 4-methyl-1-pentene and 28 mol% of a structural unit derived from propylene. The polymer had a weight-average molecular weight (Mw), which was determined by gel permeation chromatography (GPC), of 337,000, a tan δ - Tg value of 28°C, and a maximum tan δ value of 2.4.

### C) Vulcanization aid

C-1) zinc oxide Type 2 (manufactured by Mitsui Mining & Smelting Co., Ltd.)
C-2) active zinc oxide (trade name: META-Z102 (manufactured by Inoue Calcium Corporation)

### D) Processing aid

stearic acid (trade name: powder stearic acid "SAKURA" (manufactured by NOF Corporation))

### E) Reinforcing agent

carbon black (trade name: Asahi #55G (manufactured by Asahi Carbon Co., Ltd.))

### F) Filler

calcium carbonate (trade name: WHITON SB (manufactured by Shiraishi Calcium Kaisha, Ltd.)) G) Activator
polyethylene glycol (trade name: PEG#4000 (manufactured by Lion Corporation))

### H) Softener

paraffin oil (trade name: DIANA PROCESS OIL PS-430 (manufactured by Idemitsu Kosan Co., Ltd.))

### I) Vulcanizing agent

sulfur (trade name: ALPHAGRAN S-50EN (manufactured by Touchi Co., Ltd.))

### J) Vulcanization accelerator

J-1) thiuram-based vulcanization accelerator: tetramethylthiuram disulfide (trade name: SANCELER TT (manufactured by Sanshin Chemical Industry Co., Ltd.))
J-2) thiazole-based vulcanization accelerator: 2-mercaptobenzothiazole (trade name: SANCELER M (manufactured by Sanshin Chemical Industry Co., Ltd.))
J-3) thiazole-based vulcanization accelerator: dibenzothiazyl disulfide (trade name: SANCELER DM (manufactured by Sanshin Chemical Industry Co., Ltd.))
J-4) dithiocarbamate-based vulcanization accelerator: zinc dibutyldithiocarbamate (trade name: SANCELER BZ (manufactured by Sanshin Chemical Industry Co., Ltd.))
J-5) thiourea-based vulcanization accelerator: 2-imidazoline-2-thiol (trade name: SANCELER 22-C (manufactured by Sanshin Chemical Industry Co., Ltd.))
J-6) dithiocarbamate-based vulcanization accelerator: tellurium diethyldithiocarbamate (trade name: SANCELER TE-G (manufactured by Sanshin Chemical Industry Co., Ltd.))

### K) Foaming agent

4,4'-oxybis(benzenesulfonylhydrazide) (OBSH) (trade name: NEOCELLBORN N#1000M (manufactured by Eiwa Chemical Ind. Co., Ltd.))

### L) Moisture absorbent

calcium oxide (trade name: VESTA-18 (manufactured by Inoue Calcium Corporation))

### (Measurement and Evaluation Methods)

In the below-described Examples and Comparative Examples, the physical properties were measured and evaluated by the following methods.

### a) Dynamic Viscoelasticity Measurement

The temperature dependence of the viscosity of each material was measured under the below-described conditions using a viscoelasticity tester "ARES" (manufactured by TA Instruments JAPAN Inc.). The ratio of the thus measured storage elastic modulus (G') and loss elastic modulus (G") was defined as "tan δ". When the tan δ was plotted against temperature, a convex curve, that is, a peak was obtained. The temperature at the apex of the peak was defined as the glass transition temperature, that is, "tan δ - Tg", and the maximum value at this temperature was determined. When two peaks were observed for the tan δ, the peaks were defined as the first and second peaks, and the tan δ - Tg value and the maximum value were recorded for both peaks.

### (Measurement Conditions)

Frequency: 1.0 Hz
Temperature: -70 to 80°C
Ramp Rate: 4.0°C/min
Strain: 0.5%

### b) Sound Insulation Properties Test

A specimen was punched out from the subject press sheet and tube-shaped sponge molded article, and the normal-incidence transmission loss thereof was measured using a 4206T-type acoustic tube having an inner diameter of 29 mmϕ (manufactured by Brüel & Kjaer Sound & Vibration Measurement A/S) and a measurement software (PULSE Material Testing Type 7758, manufactured by Brüel & Kjaer Sound & Vibration Measurement A/S) to determine the average transmission loss at 1 to 4 kHz and 4 to 6 kHz.

### c) Specific Gravity and Specimen Weight

For each specimen used in the sound insulation properties test, the mass was measured using an automatic densimeter (manufactured by Toyo Seiki Seisaku-sho, Ltd.: M-1 type) under 25°C atmosphere, and the specific gravity was determined from the difference between the mass in the air and the mass in pure water.

### [Example 1]

Using MIXTRON BB MIXER (manufactured by Kobe Steel, Ltd.; BB-4 type, volume: 2.95 L, rotor: 4WH), 100 parts by mass of the flexible material A-1 (EPDM), 40 parts by mass of the resin B-1, 5 parts by mass of the vulcanization aid C-1 (zinc oxide) and 1 part by mass of the processing aid (stearic acid) were kneaded. The kneading was performed for 5 minutes at a rotor speed of 50 rpm and a floating weight pressure of 3 kg/cm², and the kneading discharge temperature was 148°C.

Then, after confirming that the thus kneaded composition had a temperature of 40°C or lower, 1 part by mass of the vulcanization accelerator J-1 (tetramethylthiuram disulfide), 0.5 parts by mass of the vulcanization accelerator J-2 (2-mercaptobenzothiazole) and 1.5 parts by mass of the vulcanizing agent (sulfur) were added to the composition, and the resulting mixture was kneaded using an 8-inch double-roll kneader. As for the kneading conditions, the roll temperature was set as front roll/rear roll = 50°C/50°C, the front roll speed was set at 12.5 rpm, and the rear roll speed was set at 10.4 rpm. The resulting kneaded product was rolled into a sheet form and then heat-vulcanized at 160°C for 20 minutes using a hot press, thereby obtaining a 2 mm-thick vulcanized sheet (press sheet). This vulcanized sheet was measured and evaluated as described above. The results thereof are shown in Table 1.

### [Comparative Examples 1 to 6]

For each of Comparative Examples 1 to 6, a vulcanized sheet (press sheet) was prepared under the same conditions as in Example 1 except that the formulation was changed as shown in Table 1, and the vulcanized sheet was measured and evaluated as described above. In Comparative Example 2, however, an ethylene-*α*-olefin copolymer (trade name: TAFMER DF605 (manufactured by Mitsui Chemicals, Inc.), tan δ - Tg: -46°C, maximum tan δ value: 0.5) was used in place of the resin (B). The results are shown in Table 1.

Further, with regard to the sound insulation properties of Example 1 and Comparative Examples 1 to 6, the relationships between the specimen mass and the average transmission loss are shown in Fig. 1. Figs. 1(A) and 1(B) show the results for the frequency ranges of 1 to 4 kHz and 4 to 6 kHz, respectively.

**[Table 1]**

| | | | Example 1 | Comparative Example 1 | Comparative Example 2 | Comparative Example 3 | Comparative Example 4 | Comparative Example 5 | Comparative Example 6 |
|---|---|---|---|---|---|---|---|---|---|
| Component | Flexible material | A-1 | 100 | 100 | 100 | | | | |
| | | A-2 | | | | 100 | 100 | 100 | 100 |
| | Resin | B-1 | 40 | | | | | | |
| | TAFMER DF605 | | | | 40 | | | | |
| | Reinforcing agent | Carbon black | | | | | 30 | 45 | 60 |
| Dynamic viscoelasticity measurement | First peak | tan δ - Tg (°C) | -42 | -42 | -42 | -36 | -34 | -34 | -34 |
| | | Maximum value | 0.67 | 1.15 | 0.94 | 1.71 | 1.37 | 1.19 | 1.01 |
| | Second peak | tan δ - Tg (°C) | 32 | - | - | - | - | - | - |
| | | Maximum value | 0.53 | - | - | - | - | - | - |
| Sound insulation property | Average transmission loss | 1 to 4kHz | 34.7 | 32.7 | 32.5 | 32.3 | 33.5 | 34.5 | 35.4 |
| | | 4 to 6kHz | 38.8 | 36.3 | 36.9 | 36.7 | 38.0 | 38.7 | 39.5 |
| Specific gravity | | | 0.89 | 0.92 | 0.89 | 0.91 | 1.02 | 1.07 | 1.11 |
| Mass of specimen used in sound insulation properties test (g) | | | 1.18 | 1.21 | 1.18 | 1.21 | 1.35 | 1.41 | 1.46 |

As shown in Table 1 and Fig. 1, in the frequency ranges of 1 to 4 kHz and 4 to 6 kHz to which human ears are sensitive, Comparative Examples 1 to 6 showed an improvement in the transmission loss as the mass of the specimen used for the measurements was increased. In Example 1, it is confirmed that the sound insulation properties were superior as compared to those of Comparative Examples 1 to 6 even when the mass of the specimen of Example 1 was either the same or less than those of Comparative Examples 1 to 6. From these results, it is seen that, in the sound insulator of the present invention, a reduction in weight can be achieved while maintaining the sound insulation properties of conventional sound insulators or the sound insulation properties can be improved while maintaining the lightweightness of conventional sound insulators.

### [Example 2]

Using MIXTRON BB MIXER (manufactured by Kobe Steel, Ltd.; BB-4 type, volume: 2.95 L, rotor: 4WH), 100 parts by mass of the flexible material A-3 (EPDM), 40 parts by mass of the resin B-1, 8 parts by mass of the vulcanization aid C-2 (active zinc oxide), 2 parts by mass of the processing aid (stearic acid), 88 parts by mass of the reinforcing agent (carbon black), 50 parts by mass of the filler (calcium carbonate), 1 part by mass of the activator (polyethylene glycol) and 71 parts by mass of the softener (paraffin oil) were kneaded. The kneading was performed for 5 minutes at a rotor speed of 50 rpm and a floating weight pressure of 3 kg/cm², and the kneading discharge temperature was 152°C.

After confirming that the thus kneaded composition had a temperature of 40°C or lower, 1.5 parts by mass of the vulcanization accelerator J-3 (dibenzothiazyl disulfide), 2 parts by mass of the vulcanization accelerator J-4 (zinc dibutyldithiocarbamate), 1 part by mass of the vulcanization accelerator J-5 (2-imidazoline-2-thiol), 0.1 parts by mass of the vulcanization accelerator J-6 (tellurium diethyldithiocarbamate) and 1.5 parts by mass of the vulcanizing agent (sulfur) were added to the composition, and the resulting mixture was kneaded using a 14-inch double-roll kneader. As for the kneading conditions, the roll temperature was set as front roll/rear roll = 60°C/55°C, the front roll speed was set at 13 rpm, and the rear roll speed was set at 11.5 rpm. The resulting kneaded product was rolled into a sheet form and then heat-vulcanized at 180°C for 10 minutes using a hot press, thereby obtaining a 2 mm-thick vulcanized sheet (press sheet). This vulcanized sheet was measured and evaluated as described above. The results thereof are shown in Table 2.

### [Example 3]

For Examples 3, a vulcanized sheet (press sheet) was prepared under the same conditions as in Example 2 except that the formulation was changed as shown in Table 2, and the vulcanized sheet was measured and evaluated as described above. The results thereof are shown in Table 2.

### [Comparative Examples 7 to 9]

For each of Comparative Examples 7 to 9, a vulcanized sheet (press sheet) was prepared under the same conditions as in Example 2 except that the formulation was changed as shown in Table 2, and the vulcanized sheet was measured and evaluated as described above. It is noted here, however, that an ethylene-*α*-olefin copolymer (TAFMER DF605 (manufactured by Mitsui Chemicals, Inc.), tan δ - Tg: -46°C, maximum tan δ value: 0.5) was used in place of the resin (B) in Comparative Example 8 and a polyolefin-based copolymer (trade name: NOTIO SN0285 (manufactured by Mitsui Chemicals, Inc.), tan δ - Tg: -10°C, maximum tan δ value: 1.2) was used in place of the resin (B) in Comparative Example 9. The results are shown in Table 2.

**[Table 2]**

| | | | Example 2 | Example 3 | Comparative Example 7 | Comparative Example 8 | Comparative Example 9 |
|---|---|---|---|---|---|---|---|
| Component | Flexible material | A-3 | 100 | 100 | 100 | 100 | 100 |
| | Resin | B-1 | 20 | 40 | | | |
| | TAFMER DF605 | | | | | 40 | |
| | NOTIO SN0285 | | | | | | 40 |
| Dynamic viscoelasticity measurement | First peak | tan δ - Tg (°C) | -38 | -38 | -38 | -40 | -36 |
| | | Maximum value | 0.93 | 0.66 | 1.20 | 1.01 | 0.64 |
| | Second peak | tan δ - Tg (°C) | 14 | 14 | - | - | - |
| | | Maximum value | 0.27 | 0.47 | - | - | - |
| Sound insulation property | Average transmission loss | 1 to 4kHz | 35.5 | 35.4 | 34.7 | 34.7 | 35.3 |
| | | 4 to 6kHz | 39.9 | 40.4 | 39.6 | 39.7 | 39.5 |
| Specific gravity | | | 1.15 | 1.12 | 1.18 | 1.13 | 1.14 |
| Mass of specimen used in sound insulation properties test (g) | | | 1.52 | 1.49 | 1.55 | 1.50 | 1.51 |

From the results of the sound insulation properties test, as shown in Table 2, it is seen that Examples 2 and 3 had superior sound insulation properties than Comparative Examples 7 to 9 in both frequency ranges of 1 to 4 kHz and 4 to 6 kHz, even when the mass of the specimen in Examples 2 and 3 was less than that in Comparative Examples 7 to 9.

### [Example 4]

Using MIXTRON BB MIXER (manufactured by Kobe Steel, Ltd.; BB-4 type, volume: 2.95 L, rotor: 4WH), 100 parts by mass of the flexible material A-3 (EPDM), 40 parts by mass of the resin B-1, 8 parts by mass of the vulcanization aid C-2 (active zinc oxide), 2 parts by mass of the processing aid (stearic acid), 88 parts by mass of the reinforcing agent (carbon black), 50 parts by mass of the filler (calcium carbonate), 1 part by mass of the activator (polyethylene glycol), 71 parts by mass of the softener (paraffin oil) and 5 parts by mass of the moisture absorbent (calcium oxide) were kneaded. The kneading was performed for 5 minutes at a rotor speed of 50 rpm and a floating weight pressure of 3 kg/cm², and the kneading discharge temperature was 152°C.

After confirming that the thus kneaded composition had a temperature of 40°C or lower, 2.6 parts by mass of the foaming agent (4,4'-oxybis(benzenesulfonylhydrazide)), 1.5 parts by mass of the vulcanization accelerator J-3 (dibenzothiazyl disulfide), 2 parts by mass of the vulcanization accelerator J-4 (zinc dibutyldithiocarbamate), 1 part by mass of the vulcanization accelerator J-5 (2-imidazoline-2-thiol), 0.1 parts by mass of the vulcanization accelerator J-6 (tellurium diethyldithiocarbamate) and 1.5 parts by mass of the vulcanizing agent (sulfur) were added to the composition, and the resulting mixture was kneaded using a 14-inch double-roll kneader. As for the kneading conditions, the roll temperature was set as front roll/rear roll = 60°C/55°C, the front roll speed was set at 13 rpm and the rear roll speed was set at 11.5 rpm, and the kneaded product was rolled into a ribbon form.

Next, using a 60-mmϕ extruder equipped with a tube-shaped die (inner diameter: 12 mm, thickness: 1.5 mm), the thus obtained ribbon-form composition was extruded and molded into a tube form under the conditions of a die temperature of 80°C and a cylinder temperature of 60°C. Simultaneously with the molding, the resulting molded article was introduced to a 1-kHz microwave vulcanization chamber set at 230°C and then to a straight-type hot-air vulcanizer (HAV) set at 250°C, thereby subjecting the molded article to heating for 5 minutes to perform cross-linking and foaming, as a result of which a tube-shaped sponge molded article was obtained. This sponge molded article was cut out and a specimen was punched out, and the thus obtained specimen was measured and evaluated as described above. The results thereof are shown in Table 3.

### [Examples 5 to 7]

For each of Examples 5 to 7, a tube-shaped sponge molded article was prepared and a specimen was obtained under the same conditions as in Example 4, except that the formulation and the vulcanization condition were changed as shown in Table 3. The thus obtained specimen was measured and evaluated as described above. The results thereof are shown in Table 3.

### [Comparative Examples 10 to 14]

For each of Comparative Examples 10 to 14, a tube-shaped sponge molded article was prepared and a specimen was obtained under the same conditions as in Example 4, except that the formulation and the vulcanization condition were changed as shown in Table 3. The thus obtained specimen was measured and evaluated as described above. The results thereof are shown in Table 3.

Further, with regard to the sound insulation properties of Examples 4 to 7 and Comparative Examples 10 to 14, the relationships between the specimen mass and the average transmission loss are shown in Fig. 2. Figs. 2(A) and 2(B) show the results for the frequency ranges of 1 to 4 kHz and 4 to 6 kHz, respectively.

**[Table 3]**

| | | | Example 4 | Example 5 | Example 6 | Example 7 | Comparative Example 10 | Comparative Example 11 | Comparative Example 12 | Comparative Example 13 | Comparative Example 14 |
|---|---|---|---|---|---|---|---|---|---|---|---|
| Component | Flexible material | A-3 | 100 | 100 | 100 | 100 | 100 | 100 | 100 | 100 | 100 |
| | Resin | B-1 | 20 | 20 | 20 | 20 | - | - | - | - | - |
| | Reinforcing agent | Carbon black | 88 | 88 | 81 | 81 | 81 | 81 | 81 | 81 | 81 |
| | Softener | Paraffin oil | 71 | 71 | 78 | 78 | 78 | 78 | 78 | 78 | 78 |
| | Foaming agent | OBSH | 2.6 | 2.6 | 2.6 | 2.6 | 1.5 | 2.6 | 3.3 | 3.3 | 4.0 |
| Continuous vulcanization condition | Microwave (kHz) | | 1 | 2 | 1 | 2 | 1 | 1 | 1 | 2 | 1 |
| Dynamic viscoelasticity measurement | First peak | tan δ - Tg (°C) | -38 | -38 | -38 | -38 | -38 | -40 | -40 | -40 | -38 |
| | | Maximum value | 0.88 | 0.86 | 0.85 | 0.84 | 1.19 | 1.16 | 1.07 | 1.12 | 1.12 |
| | Second peak | tan δ - Tg (°C) | 14 | 14 | 16 | 16 | - | - | - | - | - |
| | | Maximum value | 0.29 | 0.28 | 0.28 | 0.27 | - | - | - | - | - |
| Sound insulation property | Average transmission loss | 1 to 4kHz | 28.2 | 27.8 | 27.5 | 27.3 | 29.0 | 27.4 | 28.5 | 26.1 | 25.8 |
| | | 4 to 6kHz | 33.1 | 32.7 | 32.4 | 32.1 | 33.6 | 32.0 | 30.9 | 30.6 | 30.0 |
| Specific gravity | | | 0.56 | 0.53 | 0.53 | 0.50 | 0.71 | 0.50 | 0.43 | 0.43 | 0.38 |
| Thickness (mm) | | | 2.04 | 2.09 | 2.10 | 2.14 | 1.84 | 2.29 | 2.47 | 2.38 | 2.57 |
| Mass of specimen used in sound insulation properties test (g) | | | 0.75 | 0.73 | 0.73 | 0.71 | 0.86 | 0.76 | 0.70 | 0.68 | 0.64 |

As shown in Table 3 and Fig. 2, in the frequency ranges of 1 to 4 kHz and 4 to 6 kHz to which human ears are sensitive, Comparative Examples 10 to 14 showed an improvement in the transmission loss as the mass of the specimen used for the measurements was increased. In Examples 4 to 7, it is confirmed that the sound insulation properties were superior as compared to those of Comparative Examples where the specimens had the same mass as those of Examples 4 to 7. From these results, it is seen that, in the sound insulator of the present invention, a reduction in weight can be achieved while maintaining the sound insulation properties of conventional sound insulators or the sound insulation properties can be improved while maintaining the lightweightness of conventional sound insulators.

| | | | Example 5 | Example 6 | Example 7 | Example 8 | Example 9 | Example 10 | Comparative Example 13 | Comparative Example 14 | Comparative Example 15 |
|---|---|---|---|---|---|---|---|---|---|---|---|
| Component | Flexible material | A-3 | 100 | 100 | 100 | 100 | 100 | 100 | 100 | 100 | 100 |
| | Resin | B-1 | 20 | 40 | | | | | | | |
| | | B-2 | | | 20 | 40 | | | | | |
| | | B-3 | | | | | 20 | 40 | | | |
| | TAFMER DF605 | | | | | | | | | 40 | |
| | NOTIO SN0285 | | | | | | | | | | 40 |
| Dynamic viscoelasticity measurement | First peak | tan δ - Tg (°C) | -38 | -38 | -42 | -40 | -42 | -40 | -38 | -40 | -36 |
| | | Maximum value | 0.93 | 0.66 | 0.70 | 0.44 | 0.83 | 0.54 | 1.20 | 1.01 | 0.64 |
| | Second peak | tan δ - Tg (°C) | 14 | 14 | 12 | 12 | 6 | 8 | - | - | - |
| | | Maximum value | 0.27 | 0.47 | 0.40 | 0.69 | 0.38 | 0.59 | - | - | - |
| Sound insulation property | Average transmission loss | 1 to 4kHz | 35.5 | 35.4 | 35.9 | 36.8 | 35.8 | 35.8 | 34.7 | 34.7 | 35.3 |
| | | 4 to 6kHz | 39.9 | 40.4 | 40.9 | 40.5 | 40.2 | 40.6 | 39.6 | 39.7 | 39.5 |
| Specific gravity | | | 1.15 | 1.12 | 1.16 | 1.15 | 1.17 | 1.16 | 1.18 | 1.13 | 1.14 |
| Mass of specimen used in sound insulation properties test (g) | | | 1.52 | 1.49 | 1.53 | 1.52 | 1.54 | 1.53 | 1.55 | 1.50 | 1.51 |

From the results of the sound insulation properties test, as shown in Table 5, it is seen that Examples 5 to 10 had superior sound insulation properties than Comparative Examples 13 to 15 in both frequency ranges of 1 to 4 kHz and 4 to 6 kHz, even when the mass of the specimen in Examples 5 to 10 was less than that in Comparative Examples 13 to 15.

### [Example 11]

Using MIXTRON BB MIXER (manufactured by Kobe Steel, Ltd.; BB-4 type, volume: 2.95 L, rotor: 4WH), 100 parts by mass of the flexible material A-3 (EPDM), 40 parts by mass of the resin B-1, 8 parts by mass of the vulcanization aid C-2 (active zinc oxide), 2 parts by mass of the processing aid (stearic acid), 88 parts by mass of the reinforcing agent (carbon black), 50 parts by mass of the filler (calcium carbonate), 1 part by mass of the activator (polyethylene glycol), 71 parts by mass of the softener (paraffin oil) and 5 parts by mass of the moisture absorbent (calcium oxide) were kneaded. The kneading was performed for 5 minutes at a rotor speed of 50 rpm and a floating weight pressure of 3 kg/cm², and the kneading discharge temperature was 152°C.

After confirming that the thus kneaded composition had a temperature of 40°C or lower, 2.6 parts by mass of the foaming agent (4, 4'-oxybis(benzenesulfonylhydrazide)), 1.5 parts by mass of the vulcanization accelerator J-4 (dibenzothiazyl disulfide), 2 parts by mass of the vulcanization accelerator J-5 (zinc dibutyldithiocarbamate), 1 part by mass of the vulcanization accelerator J-6 (2-imidazoline-2-thiol), 0.1 parts by mass of the vulcanization accelerator J-7 (tellurium diethyldithiocarbamate) and 1.5 parts by mass of the vulcanizing agent (sulfur) were added to the composition, and the resulting mixture was kneaded using a 14-inch double-roll kneader. As for the kneading conditions, the roll temperature was set as front roll/rear roll = 60°C/55°C, the front roll speed was set at 13 rpm and the rear roll speed was set at 11.5 rpm, and the kneaded product was rolled into a ribbon form.

Next, using a 60-mmϕ extruder equipped with a tube-shaped die (inner diameter: 12 mm, thickness: 1.5 mm), the thus obtained ribbon-form composition was extruded and molded into a tube form under the conditions of a die temperature of 80°C and a cylinder temperature of 60°C. Simultaneously with the molding, the resulting molded article was introduced to a 1-kHz microwave vulcanization chamber set at 230°C and then to a straight-type hot-air vulcanizer (HAV) set at 250°C, thereby subjecting the molded article to heating for 5 minutes to perform cross-linking and foaming, as a result of which a tube-shaped sponge molded article was obtained. This sponge molded article was cut out and a specimen was punched out, and the thus obtained specimen was measured and evaluated as described above. The results thereof are shown in Table 6.

### [Examples 12 to 16]

For each of Examples 12 to 16, a tube-shaped sponge molded article was prepared and a specimen was obtained under the same conditions as in Example 11, except that the formulation and the vulcanization condition were changed as shown in Table 6. The thus obtained specimen was measured and evaluated as described above. The results thereof are shown in Table 6.

### [Comparative Examples 16 to 20]

For each of Comparative Examples 16 to 20, a tube-shaped sponge molded article was prepared and a specimen was obtained under the same conditions as in Example 11, except that the formulation and the vulcanization condition were changed as shown in Table 6. The thus obtained specimen was measured and evaluated as described above. The results thereof are shown in Table 6.

Further, with regard to the sound insulation properties of Examples 11 to 16 and Comparative Examples 16 to 20, the relationships between the specimen mass and the average transmission loss are shown in Fig. 2. Figs. 2(A) and 2(B) show the results for the frequency ranges of 1 to 4 kHz and 4 to 6 kHz, respectively.

**[Table 6]**

| | | | Example 11 | Example 12 | Example 13 | Example 14 | Example 15 | Example 16 | Comparative Example 16 | Comparative Example 17 | Comparative Example 18 | Comparative Example 19 | Comparative Example 20 |
|---|---|---|---|---|---|---|---|---|---|---|---|---|---|
| Component | Flexible material | A-3 | 100 | 100 | 100 | 100 | 100 | 100 | 100 | 100 | 100 | 100 | 100 |
| | Resin | B-1 | 20 | 20 | 20 | 20 | - | - | - | - | - | - | - |
| | | B-2 | - | - | - | - | 20 | 20 | - | - | - | - | - |
| | Reinforcing agent | Carbon black | 88 | 88 | 81 | 81 | 81 | 81 | 81 | 81 | 81 | 81 | 81 |
| | Softener | Paraffin oil | 71 | 71 | 78 | 78 | 78 | 78 | 78 | 78 | 78 | 78 | 78 |
| | Foaming agent | OBSH | 2.6 | 2.6 | 2.6 | 2.6 | 2.6 | 2.6 | 1.5 | 2.6 | 3.3 | 3.3 | 4.0 |
| Continuous vulcanization condition | Microwave (kHz) | | 1 | 2 | 1 | 2 | 1 | 2 | 1 | 1 | 1 | 2 | 1 |
| Dynamic viscoelasticity measurement | First peak | tan δ - Tg (°C) | -38 | -38 | -38 | -38 | -40 | -40 | -38 | -40 | -40 | -40 | -38 |
| | | Maximum value | 0.88 | 0.86 | 0.85 | 0.84 | 0.72 | 0.71 | 1.19 | 1.16 | 1.07 | 1.12 | 1.12 |
| | Second peak | tan δ - Tg (°C) | 14 | 14 | 16 | 16 | 12 | 12 | - | - | - | - | - |
| | | Maximum value | 0.29 | 0.28 | 0.28 | 0.27 | 0.38 | 0.38 | - | - | - | - | - |
| Sound insulation property | Average transmission loss | 1 to 4kHz | 28.2 | 27.8 | 27.5 | 27.3 | 28.4 | 28.4 | 29.0 | 27.4 | 28.5 | 26.1 | 25.8 |
| | | 4 to 6kHz | 33.1 | 32.7 | 32.4 | 32.1 | 33.2 | 33.2 | 33.6 | 32.0 | 30.9 | 30.6 | 30.0 |
| Specific gravity | | | 0.56 | 0.53 | 0.53 | 0.50 | 0.53 | 0.51 | 0.71 | 0.50 | 0.43 | 0.43 | 0.38 |
| Thickness (mm) | | | 2.04 | 2.09 | 2.10 | 2.14 | 2.22 | 2.25 | 1.84 | 2.29 | 2.47 | 2.38 | 2.57 |
| Mass of specimen used in sound insulation properties test (g) | | | 0.75 | 0.73 | 0.73 | 0.71 | 0.78 | 0.76 | 0.86 | 0.76 | 0.70 | 0.68 | 0.64 |

As shown in Table 6 and Fig. 2, in the frequency ranges of 1 to 4 kHz and 4 to 6 kHz to which human ears are sensitive, Comparative Examples 16 to 20 showed an improvement in the transmission loss as the mass of the specimen used for the measurements was increased. In Examples 11 to 16, it is confirmed that the sound insulation properties were superior as compared to those of Comparative Examples where the specimens had the same mass as those of Examples 11 to 16. From these results, it is seen that, in the sound insulator of the present invention, a reduction in weight can be achieved while maintaining the sound insulation properties of conventional sound insulators or the sound insulation properties can be improved while maintaining the lightweightness of conventional sound insulators.

## Claims

1. A sound insulator comprising:
a flexible material (A) having a peak of loss tangent (tan δ), which is determined by dynamic viscoelasticity measurement, in a temperature range of -60°C to lower than 0°C; and
a resin (B) having a peak of loss tangent (tan δ), which is determined by dynamic viscoelasticity measurement, in a temperature range of 0°C to 60°C,
said sound insulator comprising said resin (B) at a ratio of 10 to 40 parts by mass with respect to 100 parts by mass of said flexible material (A), and
said resin (B) comprises a 4-methyl-1-pentene·*α*-olefin copolymer (b-1) which contains 61 to 85% by mol of a structural unit (i) derived from 4-methyl-1-pentene, 15 to 39% by mol of a structural unit (ii) derived from at least one *α*-olefin selected from *α*-olefins having 2 to 20 carbon atoms excluding 4-methyl-1-pentene and 0 to 5% by mol of a structural unit (iii) derived from a non-conjugated polyene, with a proviso that the total amount of said structural units (i), (ii) and (iii) is 100% by mol.

2. The sound insulator according to claim 1, wherein said flexible material (A) comprises at least one selected from ethylene-based rubbers, natural rubbers and diene-based rubbers.

3. The sound insulator according to claim 1, wherein said flexible material (A) comprises an ethylene·*α*-olefin·non-conjugated polyene copolymer (a).

4. The sound insulator according to claim 3, wherein said ethylene·*α*-olefin·non-conjugated polyene copolymer (a) comprises a structural unit derived from ethylene in an amount of 40 to 72% by mass and a structural unit derived from a non-conjugated polyene in an amount of 2 to 15% by mass.

5. The sound insulator according to any one of claims 1 to 4, which is obtained by cross-linking a composition comprising said flexible material (A) and said resin (B) using a vulcanizing agent.

6. The sound insulator according to any one of claims 1 to 5, wherein at least a portion of said sound insulator is a foamed article.

7. A sealing material for automobiles, comprising the sound insulator according to any one of claims 1 to 6.

8. A sealing material for construction, comprising the sound insulator according to any one of claims 1 to 6.

9. A sealing material for railway vehicles, comprising the sound insulator according to any one of claims 1 to 6.

10. A sealing material for ships, comprising the sound insulator according to any one of claims 1 to 6.

11. A sealing material for airplanes, comprising the sound insulator according to any one of claims 1 to 6.

## Patentansprüche

1. Schallisolator, umfassend:
ein flexibles Material (A) mit einem Peak des Verlustfaktors (tan δ), der durch dynamische Viskoelastizitätsmessung bestimmt ist, in einem Temperaturbereich von -60 °C bis niedriger als 0 °C und
ein Harz (B) mit einem Peak des Verlustfaktors (tan δ), der durch dynamische Viskoelastizitätsmessung bestimmt ist, in einem Temperaturbereich von 0 °C bis 60 °C,
wobei der Schallisolator das Harz (B) in einem Verhältnis von 10 bis 40 Massenteilen in Bezug auf 100 Massenteile des flexiblen Materials (A) umfasst und
das Harz (B) ein 4-Methyl-1-penten·α-Olefin-Copolymer (b-1) umfasst, das 61 bis 85 Mol-% einer von 4-Methyl-1-penten abgeleiteten Struktureinheit (i), 15 bis 39 Mol-% einer Struktureinheit (ii), die von mindestens einem α-Olefin abgeleitet ist, das aus α-Olefinen mit 2 bis 20 Kohlenstoffatomen ausgewählt ist, ausgenommen 4-Methyl-1-penten, und 0 bis 5 Mol-% einer von einem nichtkonjugierten Polyen abgeleiteten Struktureinheit (iii) enthält, mit einer Maßgabe, dass die Gesamtmenge der Struktureinheiten (i), (ii) und (iii) 100 Mol-% beträgt.

2. Schallisolator nach Anspruch 1, wobei das flexible Material (A) mindestens eines ausgewählt aus Kautschuken auf Ethylenbasis, Naturkautschuken und Kautschuken auf Dienbasis umfasst.

3. Schallisolator nach Anspruch 1, wobei das flexible Material (A) ein Copolymer (a) aus Ethylen·α-Olefin·nichtkonjugiertem Polyen umfasst.

4. Schallisolator nach Anspruch 3, wobei das Copolymer (a) aus Ethylen·α-Olefin·nichtkonjugiertem Polyen eine von Ethylen abgeleitete Struktureinheit in einer Menge von 40 bis 72 Massen-% und eine von einem nichtkonjugierten Polyen abgeleitete Struktureinheit in einer Menge von 2 bis 15 Massen-% umfasst.

5. Schallisolator nach einem der Ansprüche 1 bis 4, der durch Vernetzen einer Zusammensetzung, die das flexible Material (A) und das Harz (B) umfasst, unter Verwendung eines Vulkanisiermittels erhalten wird.

6. Schallisolator nach einem der Ansprüche 1 bis 5, wobei mindestens ein Teil des Schallisolators ein geschäumter Gegenstand ist.

7. Dichtungsmaterial für Automobile, umfassend den Schallisolator nach einem der Ansprüche 1 bis 6.

8. Dichtungsmaterial für den Bau, umfassend den Schallisolator nach einem der Ansprüche 1 bis 6.

9. Dichtungsmaterial für Schienenfahrzeuge, umfassend den Schallisolator nach einem der Ansprüche 1 bis 6.

10. Dichtungsmaterial für Schiffe, umfassend den Schallisolator nach einem der Ansprüche 1 bis 6.

11. Dichtungsmaterial für Flugzeuge, umfassend den Schallisolator nach einem der Ansprüche 1 bis 6.

## Revendications

1. Isolant acoustique, comprenant :
un matériau flexible (A) ayant une crête de tangente d'angle de perte (tan δ), qui est déterminée par mesure de viscoélasticité dynamique, dans une plage de température de -60°C à moins de 0°C ; et
une résine (B) ayant une crête de tangente d'angle de perte (tan δ), qui est déterminée par mesure de viscoélasticité dynamique, dans une plage de température de 0°C à 60°C,
ledit isolant acoustique comprenant ladite résine (B) à un rapport de 10 à 40 parties en masse par rapport à 100 parties en masse dudit matériau flexible (A), et
ladite résine (B) comprend un copolymère 4-méthyl-1-pentène·α-oléfine (b-1) qui contient de 61 à 85 % en mole d'un motif structural (i) dérivé de 4-méthyl-1-pentène, de 15 à 39 % en mole d'un motif structural (ii) dérivé d'au moins une α-oléfine sélectionnée parmi des α-oléfines ayant de 2 à 20 atomes de carbone, à l'exclusion de 4-méthyl-1-pentène, et de 0 à 5 % en mole d'un motif structural (iii) dérivé d'un polyène non conjugué, à condition que la quantité totale desdits motifs structuraux (i), (ii) et (iii) soit 100 % en mole.

2. Isolant acoustique selon la revendication 1, dans lequel ledit matériau flexible (A) comprend au moins un sélectionné parmi des caoutchoucs à base d'éthylène, des caoutchoucs naturels et des caoutchoucs à base de diène.

3. Isolant acoustique selon la revendication 1, dans lequel ledit matériau flexible (A) comprend un copolymère éthylène·α-oléfine·polyène non conjugué (a).

4. Isolant acoustique selon la revendication 3, dans lequel ledit copolymère éthylène·α-oléfine·polyène non conjugué (a) comprend un motif structural dérivé d'éthylène en une quantité de 40 à 72 % en masse et un motif structural dérivé d'un polyène non conjugué en une quantité de 2 à 15 % en masse.

5. Isolant acoustique selon l'une quelconque des revendications 1 à 4, qui est obtenu en réticulant une composition comprenant ledit matériau flexible (A) et ladite résine (B) en utilisant un agent de vulcanisation.

6. Isolant acoustique selon l'une quelconque des revendications 1 à 5, dans lequel au moins une portion dudit isolant acoustique est un article mousse.

7. Matériau d'étanchéité pour automobiles, comprenant l'isolant acoustique selon l'une quelconque des revendications 1 à 6.

8. Matériau d'étanchéité pour construction, comprenant l'isolant acoustique selon l'une quelconque des revendications 1 à 6.

9. Matériau d'étanchéité pour véhicules ferroviaires, comprenant l'isolant acoustique selon l'une quelconque des revendications 1 à 6.

10. Matériau d'étanchéité pour navires, comprenant l'isolant acoustique selon l'une quelconque des revendications 1 à 6.

11. Matériau d'étanchéité pour avions, comprenant l'isolant acoustique selon l'une quelconque des revendications 1 à 6.
